Europäisches Patentamt

European Patent Office

Office européen des brevets

(19)

(11) **EP 0 515 836 B1**

(12) **EUROPEAN PATENT SPECIFICATION**

(45) Date of publication and mention
of the grant of the patent:
**06.11.1996 Bulletin 1996/45**

(51) Int Cl.6: **G06E 3/00**

(21) Application number: **92106957.1**

(22) Date of filing: **23.04.1992**

(54) **Data processing system comprising a neural network**

Datenverarbeitungsanordnung mit neuronalem Netzwerk

Système de traitement de données comprenant un réseau neuronal

(84) Designated Contracting States:
**DE FR GB**

(30) Priority: **26.04.1991 JP 125189/91**

(43) Date of publication of application:
**02.12.1992 Bulletin 1992/49**

(73) Proprietors:
• **YOZAN INC.**
**Tokyo 155 (JP)**
• **SHARP KABUSHIKI KAISHA**
**Osaka 545 (JP)**

(72) Inventor: **Takatori, Sunao**
**Setagaya-ku, Tokyo 155 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 405 974**

• **ELECTRONIC DESIGN, vol. 37, no. 12, 8 June 1989, Hasbrouck Heights, New Jersey, US, page 27; J. TILL : "Optoelectronic scheme opens doors for neural nets"**

## Description

## FIELD OF THE INVENTION

The present invention relates to a neural network type data processing system.

## BACKGROUND OF THE INVENTION

A data processing system of so-called "neural network type" has huge number of data lines according to the base of distributed processing system. Consequently, it can form a few numbers of neurons because of the restriction of the number of pins when it is realized by hardware. It is also executed to process by software so as to avoid such restriction, but the processing speed is not fast enough. It was impossible to apply the data processing system of neural network type to the productions for consumers because it was generally necessary a high speed and large capacity computer.

From D1: Electronic Design. vol.37, no.12, 8 June 1989, Hasbrouck Heights, New Jersey, USA, page 27. J. Till: "Optoelectronic Scheme Opens Doors For Neural Nets." a neural network type data processor is known which uses a photo-conductive layer. The photo-conductive layer is illuminated by a planar light source and the illumination is modulated by a planar "light valve", which is followed by a light panel. With this construction any arbitrary 2D-interconnection pattern can be generated.

From EP-A-0405974 a holographic operating optical apparatus is known. In particular this reference describes in connection with Figure 2, a liquid crystal light valve comprising a liquid crystal layer being sandwiched by a pair of transparent substrates 15a and 15b composed of glass or plastic. Substrates 15a and 15b are formed thereon with respective transparent electrode layers 16a and 16b and respective alignment layers 17a and 17b. The pair of transparent substrates 15a and 15b are coupled to each other with a gap controlled by a spacer 23 such that alignment layers 17a and 17b are opposed to each other to sandwich there between the ferro-electric liquid crystal 18. Further, a photo-contactive layer 19, an optical shielding layer 20 and a dielectric mirror 21 are sequentially laid in order on transparent electrode layer 16a of optical writing side between the electrode layer and the alignment layer 17a. Anti-reflection coatings 22a and 22b are formed on respective outfaces of the writing side transparent substrate 15a and the reading side transparent substrate 15b.

It is the object of the present invention to provide an improved neural network type data processing system. This object is solved by the subject matter of claim 1.

A data processing system according to the present invention gives an input of two dimensional image pattern to a portion for receiving light made from material with photovoltaic effect, and supply a part of liquid crystal panel through an amplifier with the electromotive force generated in each area of the portion for receiving light when it receives the input. It realize a neuron with a plural number of synapses which can change weight by making plural areas to be correspondent to one liquid crystal part and by making each gain of an amplifier to be controlled. The amplifier is located between a small area and a liquid crystal part, at least electrically located between them. The output of each neuron can be took out by the way to detect the light penetrating a part of a liquid crystal panel, for example.

The data processing system of the present invention makes it possible to process a lot of data because the data is input and output by two dimensional image data. It also makes it possible to process it in high speed because the processing is executed electrically.

## BRIEF DESCRIPTION OF THE DRAWINGS

Fig. 1 shows the section of the embodiment of the data processing system relates to the present invention.

Fig. 2 diagrams a circuit to show the way to supply electric power to a part in the embodiment in Fig. 1.

Fig. 3 diagrams an amplifying circuit in the embodiment in Fig. 1.

Fig. 4 diagrams a changeable resistance in the amplifying circuit in Fig. 3.

Fig. 5 diagrams a circuit to show a neural network with a plural number of layers formed by the embodiment in Fig. 1.

"1" shows a thin film, "2" shows a liquid crystal panel, "3" shows an amplifier, "P" shows a part, a nd "Rf" shows a changeable resistance.

## PREFERRED EMBODIMENT OF THE PRESENT INVENTION

Hereinafter, an embodiment of the data processing system according to the present invention is described with reference to the attached drawings.

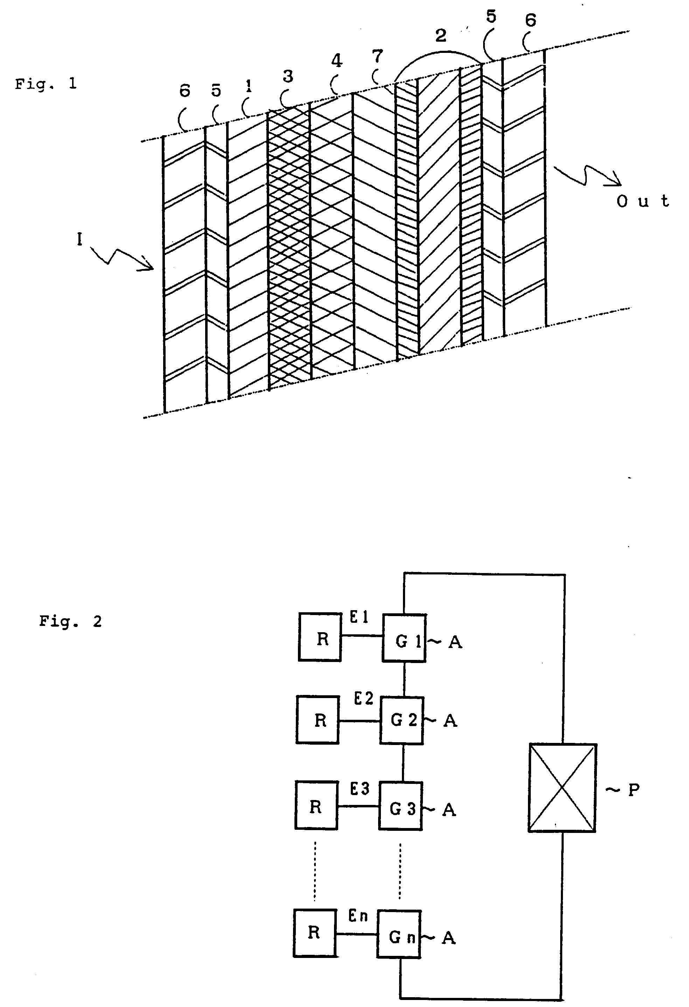

In Fig. 1, the data processing system comprises thin film 1 made from material with photovoltaic effect of a-SiH, for example, and liquid crystal panel 2. Each area of thin film 1 is connected to part of liquid crystal panel 2 through amplifier 3 of thin film.

As shown in Fig. 2, liquid crystal part "P" has correspondence to plural areas "R" in thin film 1. The electromotive force in each area is amplified by amplifying circuit A, and amplified voltage is integrated and impressed on part P.

Here, assuming the i-th electromotive force to be "Ei", the gain of amplifying circuit corresponding to the area to be "Gi" and the number of areas connected to a part "P" to be "n", the voltage "E" for being impressed on a part is shown by the formula below.

$$E = \sum_{i}^{n} (Ei \times Gi)$$

Part "P" does not generate the change of the state unless electromotive force equal to or more than a predetermined value is impressed. Indicating the existence and inexistence of the change of state by a variable "S" (when "S" is 1, the change of state exists and when "S" is 2, it does not exist), and normalized function by "f( )", the relationship between "S" and "f( )" can be shown as below.

$$S = f(E)$$
$$= f\{\sum_{i}^{n} (Ei \times Gi) - \theta \}$$

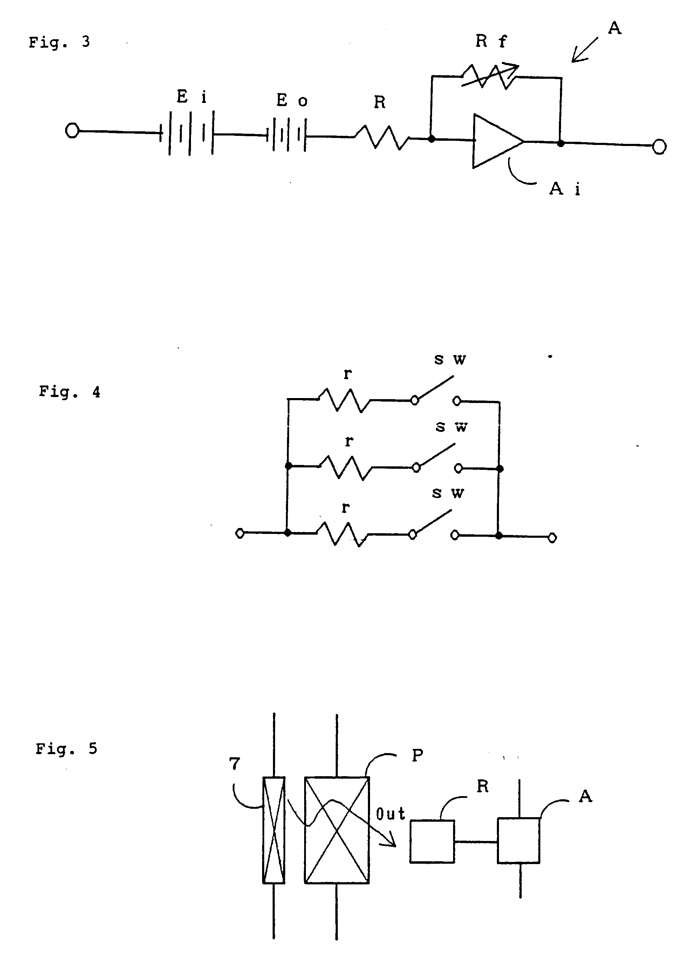

This formula is equivalent to that of McClloch and Pitts model which concerns to the action of a neuron. It shows that a neuron is formed by the circuit in Fig. 2. As shown in Fig. 3, amplifying circuit "A" connects computation amplifier "Ai" with input resistance "R" and feedback resistance "Rf". A gain is set according to the ratio of these resistances (Rf/R). The feedback resistance is changeable resistance in order to control the gain. The changeable resistance Rf and a register for setting resistance value (not shown in the figure) are settled in thin film 4 adhered to amplifier 3. Changeable resistance is formed as in Fig. 4, for example.

In Fig. 4, changeable resistance Rf consists a plural number of resistances "r" connected in parallel. Switch "SW" with not point of contact of transistor or the like is connected to the resistance. The number of switches to be disconnected in the switches is registered in the register. The number of switches corresponds to the gain in the amplifying circuit.

Electromotive force "Ei" is impressed on amplifying circuit "A" with bias voltage "Eo". Adding bias of n× Eo to the integrated value "E", a part is surely driven for the predetermined input. The bias voltage Eo is impressed on thin film 1 and lucent electrode 5 which is adhered to liquid crystal panel 2. The whole of data processing system is protected by covering the both of the outsides of it.

An input data is input to data processing system as multiple values of two dimensional image pattern I. Each area of thin film 1 generates electromotive force corresponding to it. The electromotive force is integrated after multiplying gain. When the integrated value exceeds the threshold θ, the corresponding liquid crystal part is driven. It is possible to process a large volumes of data because two dimensional image pattern can be an input data in this way. The state of each liquid crystal part can be two dimensional image in the same way. The light of a luminous object of "EL" or the like is penetrated through liquid crystal panel and can be output as the image generated by penetrated light "Out". When the output light is input to the data processing system in the following step as shown in Fig. 5, a neural network with a plural number of layers can be formed.

When a panel of ferroelectric liquid crystal is used as a liquid crystal panel, It is possible to keep the changed state without supplying electric power, which is advantageous. In this case, a circuit for impressing reverse-bias is necessary so as to return the changed state to the initial state.

As mentioned above, it is possible to process huge volume of data by the data processing system according to the present invention because the data is input and output by two dimensional image data. It is also possible to process in high speed because the processing is executed electrically.

## Claims

1. A neural network type data processing system comprising a light receiving input portion (1) made of a photovoltaic material which is arranged to generate an electromotive force, said portion being divided in a plurality of areas (R), each of said areas (R) being able to generate an electromotive force as a function of incident light, each of said areas (R) being electrically connected to a corresponding amplifier (3) and a changeable resistance (4) for setting the gain of said amplifier, and a liquid crystal panel (2) having plural portions (P), said portions (P) being connected to plurality of said amplifiers and being driven by the integrated output of said amplifiers, said liquid crystal panel forming the output of said processing system which can be read by a reading beam.

2. A neural network type data processing system according to claim 1, wherein said liquid crystal panel (2) is a ferroelectric liquid crystal panel.

## Patentansprüche

1. Ein Datenverarbeitungssystem vom Typ eines neuronalen Netzwerks, umfassend einen lichtempfangenden Eingabeabschnitt (1), der aus photovoltaischem Material besteht, das zur Erzeugung einer elektromotorischen Kraft vorgesehen ist, wobei der Abschnitt in eine Mehrzahl von Bereichen (R) geteilt ist, wobei jeder Bereich (R) in der Lage ist, eine elektromotorische Kraft als Funktion des einfallenden Lichts zu erzeugen, wobei jeder Bereich (R) elektrisch mit einem entsprechenden Verstärker (3) und einem änderbaren Widerstand (4) zur Einstellung der Verstärkung des Verstärkers verbunden ist, und ein Flüssigkristallfeld (2) mit mehreren Abschnitten (P), wobei die Abschnitte (P) mit einer Mehrzahl der Verstärker verbunden sind und durch das integrierte Ausgangssignal der Verstärker angesteuert werden, wobei das Flüssigkristallfeld die Ausgabe des Verarbeitungssystems formt, die durch einen Lesestrahl gelesen werden kann.

2. Ein Datenverarbeitungssystem vom Typ eines neuronalen Netzwerks nach Anspruch 1, in welchem das Flüssigkristallfeld (2) ein ferroelektrisches Flüssigkristallfeld ist.

**Revendications**

1. Système de traitement de données du type à réseau neuronal comprenant une portion d'entrée de réception de lumière (1) composée d'un matériau photovoltaïque qui est disposé pour générer une force électromotrice, ladite portion étant divisée en une pluralité de zones (R), chacune desdites zones (R) pouvant générer une force électromotrice en fonction de la lumière incidente, chacune desdites zones (R) étant connectée électriquement à un amplificateur (3) correspondant et à une résistance variable (4) pour établir le gain dudit amplificateur, et un panneau à cristaux liquides (2) comportant plusieurs parties (P), lesdites parties (P) étant connectées à une pluralité desdits amplificateurs et étant excitées par les données intégrées de sortie desdits amplificateurs, ledit panneau à cristaux liquides formant les données de sortie dudit système de traitement qui peuvent être lues par un faisceau de lecture.

2. Système de traitement de données du type à réseau neuronal selon la revendication 1, dans lequel ledit panneau à cristaux liquides (2) est un panneau à cristaux liquides ferroélectriques.

Fig. 1

Fig. 2

Fig. 3

Fig. 4

Fig. 5

6